(19) Europäisches Patentamt
European Patent Office
Office européen des brevets

(11) **EP 1 940 636 B1**

(12) **EUROPÄISCHE PATENTSCHRIFT**

(45) Veröffentlichungstag und Bekanntmachung des Hinweises auf die Patenterteilung:
**17.10.2012 Patentblatt 2012/42**

(21) Anmeldenummer: **06805477.4**

(22) Anmeldetag: **23.10.2006**

(51) Int Cl.:
*G05D 23/19* (2006.01)    *B60H 1/22* (2006.01)

(86) Internationale Anmeldenummer:
**PCT/DE2006/001880**

(87) Internationale Veröffentlichungsnummer:
**WO 2007/048394 (03.05.2007 Gazette 2007/18)**

(54) **STEUEREINRICHTUNG FÜR EIN MOTORUNABHÄNGIGES HEIZGERÄT, HEIZGERÄT, HEIZSYSTEM UND VERFAHREN ZUM STEUERN EINES MOTORUNABHÄNGIGEN HEIZGERÄTS**

CONTROL DEVICE FOR AN ENGINE-INDEPENDENT HEATER, HEATING SYSTEM, AND METHOD FOR CONTROLLING AN ENGINE-INDEPENDENT HEATER

DISPOSITIF DE COMMANDE D'UN APPAREIL DE CHAUFFAGE INDEPENDANT DU MOTEUR, SYSTEME DE CHAUFFAGE ET PROCEDE DE COMMANDE D'UN APPAREIL DE CHAUFFAGE INDEPENDANT DU MOTEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.10.2005 DE 102005050862**

(43) Veröffentlichungstag der Anmeldung:
**09.07.2008 Patentblatt 2008/28**

(73) Patentinhaber: **Webasto AG**
**82131 Stockdorf (DE)**

(72) Erfinder:
• **GERHARDT, Nikolaus**
**85764 Oberschleissheim (DE)**

• **GÖTTL, Karl**
**83026 Rosenheim (DE)**
• **GRINER, Markus**
**82110 Germering (DE)**

(74) Vertreter: **Schumacher & Willsau**
**Patentanwaltsgesellschaft mbH**
**Nymphenburger Strasse 42**
**80335 München (DE)**

(56) Entgegenhaltungen:
**DE-A1- 3 517 953    DE-A1- 4 123 678**
**DE-A1- 19 524 260    US-A1- 5 788 148**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Steuereinrichtung für ein motorunabhängiges Heizgerät, das einen flüssigen Wärmeträger eines Wärmeträgerkreislaufs insbesondere für Kraftfahrzeuge erwärmt, wobei die Steuereinrichtung eine Heizleistung des Heizgeräts verringert, wenn ein aktueller Temperaturgradient des Wärmeträgers gleich oder größer als ein Temperaturgradienten-Schwellenwert ist.

Weiterhin betrifft die Erfindung ein Heizgerät und ein Heizsystem.

Darüber hinaus betrifft die Erfindung ein Verfahren zum Steuern eines motorunabhängigen Heizgeräts, das einen flüssigen Wärmeträger eines Wärmekreislaufs insbesondere für Kraftfahrzeuge erwärmt.

Aus dem Stand der Technik sind bereits Maßnahmen bekannt, um eine Überhitzungsgefahr eines in einem Wärmeträgerkreislauf eingebundenen Heizgerätes frühzeitig zu erkennen. Der drohende Überhitzungszustand soll dabei deutlich vor dem Eintreten des tatsächlichen Überhitzungszustands erkannt werden, so dass Gegenmaßnahmen ergriffen werden können, bevor Schäden am Heizgerät oder dem Wärmeträgerkreislauf entstehen.

Aus der DE 195 24 260 C2 sind eine Steuereinrichtung für ein motorunabhängiges Heizgerät, ein Heizgerät, ein Heizsystem und ein Verfahren zum Steuern eines motorunabhängigen Heizgeräts bekannt. Das in der DE 195 24 260 C2 beschriebene Heizgerät wird insbesondere zur Innenraumbeheizung eines Kraftfahrzeugs verwendet. Im Betrieb werden bei diesem.Heizgerät die Heizleistung verringert oder das Heizgerät abgeschaltet, wenn ein aktueller Temperaturgradient des Wärmeträgers einen Schwellenwert des Temperaturgradienten überschreitet. Abhängig von der aktuellen Temperatur des Wärmeträgers werden verschiedene Schwellenwerte des Temperaturgradienten ausgewählt. So kann ein vergleichsweise schneller Temperaturanstieg ohne Überhitzungsgefahr zugelassen werden, solange das Temperaturniveau niedrig und damit deutlich unter einem gefährlichen Temperaturniveau bleibt. Sobald dagegen bereits höhere Temperaturen erreicht worden sind, ist nur noch ein vergleichsweise langsamer Temperaturanstieg zulässig.

Da demgemäß die Schwellenwerte des Temperaturgradienten festen Temperaturwerten des Wärmeträgers zugeordnet sind, muss diese Zuordnung abhängig von den Eigenschaften, wie beispielsweise thermodynamischen Eigenschaften, des Wärmeträgersystems vorab festgelegt werden. Nach einer Änderung des Wärmeträgersystems, beispielsweise nach Verwendung eines anderen Wärmeträgers, ist die Steuerung des Heizgeräts nur noch bedingt einsetzbar und nicht mehr an das veränderte System angepasst.

Die DE 41 23 678 A1 zeigt eine Heizung für Kraftfahrzeuge, bei der über eine Regeleinrichtung die Drehzahl einer Umwälzpumpe nach Maßgabe einer als Sollziel vorgegebenen Temperaturanstiegsgeschwindigkeit im Vergleich zu einem Ist-Wert geregelt wird. Die DE 41 23 678 A1 sieht zwar vor, dass die Soll-Temperaturanstiegsgeschwindigkeit bei Erreichen einer vorbestimmten Wärmeträgertemperatur null ist. Somit wird die Drehzahl der verwendeten Umwälzpumpe so eingestellt, dass die Soll-Temperaturanstiegsgeschwindigkeit bei einer vorbestimmten Wärmeträgertemperatur null ist.

Außerdem wird in der DE 41 23 678 A1 ein Bereich in Kelvin pro Minute angegeben, in dem der Sollwert der Temperaturanstiegsgeschwindigkeit des Wärmeträgers liegen soll. Bevorzugt soll der Wert in einem Bereich von 8 bis 20 K/min gewählt werden, wobei insbesondere ein Sollwert von 12 K/min zweckmäßig sei. Der Sollwert selbst ist jedoch eine vorgegebene Temperaturanstiegsgeschwindigkeit und wurde empirisch ermittelt.

Die DE 41 23 678 A1 legt nicht nahe, dass der Temperaturgradienten-Schwellenwert dynamisch, also in immer wiederkehrender Wiederholung, ermittelt werden könnte.

Es ist daher die Aufgabe der vorliegenden Erfindung, die gattungsgemäßen Komponenten und das gattungsgemäße Verfahren derart weiterzubilden, dass eine flexiblere Steuerung des Heizgeräts möglich wird, die einen möglichen Überhitzungsfall noch frühzeitiger und differenzierter erkennt.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Steuereinrichtung für ein motorunabhängiges Heizgerät baut auf dem gattungsgemäßen Stand der Technik dadurch auf, dass die Steuereinrichtung den Temperaturgradienten-Schwellenwert dynamisch in Abhängigkeit eines Temperaturunterschieds zwischen einer zu erreichenden Zieltemperatur des Wärmeträgers und einer aktuellen Wärmeträgertemperatur ermittelt. Dadurch, dass der Temperaturgradienten-Schwellenwert dynamisch, d.h. in immer wiederkehrender Wiederholung, ermittelt wird, liegt permanent der exakte Temperaturgradienten-Schwellenwert vor, bei dessen Überschreitung ein Überhitzungszustand des Wärmeträgersystems oder einer Komponente daraus entstehen könnte. Da darüber hinaus der Temperaturgradienten-Schwellenwert in Abhängigkeit des Temperaturunterschieds zwischen Ist- und Solltemperatur ermittelt wird, ist die Steuereinrichtung auch für die Steuerung eines Heizgerätes geeignet, bei dem die Zieltemperatur des Wärmeträgers variiert. Diese Zieltemperatur des Wärmeträgers kann beispielsweise vom verwendeten Wärmeträger abhängen, so dass generell eine niedrigere maximale Zieltemperatur zulässig ist, wenn ein Wärmeträger verwendet wird, bei dem der Überhitzungszustand bei einer vergleichsweise niedrigeren Temperatur eintritt. Darüber hinaus wäre denkbar, dass der Wärmeträger während verschiedener Betriebsphasen auf verschiedenen Temperaturniveaus betrieben werden soll. Die Erkennung drohendem Überhitzungszustands kann auf der Grundlage der Erfindung bei verschiedenen Zieltemperaturen in zuverlässiger Weise erfolgen. Durch die erfindungsgemäße Steuereinrichtung kann ein möglicher Überhitzungszustand des Wärmeträgersystems oder einer Komponente davon somit wesentlich differenzierter und frühzeitiger erkannt werden.

Die erfindungsgemäße Steuereinrichtung kann in verteilhafterweise dadurch weitergebildet sein, dass die Steuereinrichtung bei der Ermittlung des Temperaturgradienten-Schwellenwertes zusätzlich eine Umgebungstemperatur berücksichtigt. Dadurch wird bei der Erkennung eines drohenden Überhitzungszustandes auch berücksichtigt, in welcher Umgebung das erfindungsgemäße Heizgerät bzw. das erfindungsgemäße Heizsystem eingesetzt wird, auch im Hinblick auf den Einsatz eines Kraftfahrzeugs in verschiedenen Klimaregionen. Wenn beispielsweise die Umgebungstemperatur relativ niedrig ist, deutet ein hoher Temperaturgradient weniger auf einen Überhitzungsfall hin als bei einer Umgebung mit relativ hoher Temperatur. Die erfindungsgemäße Steuereinrichtung gemäß dieser Weiterbildung berücksichtigt diesen Umstand.

Bei einer bevorzugten Ausführungsform der erfindungsgemäßen Steuereinrichtung ist weiterhin vorgesehen, dass die Steuereinrichtung den Temperaturgradienten-Schwellenwert ermittelt, indem sie diesen berechnet. Durch die dynamische, d.h. ständig wiederholte, Berechnung des Temperaturgradienten-Schwellenwerts ist das Optimum der Bestimmung des Temperaturgradienten-Schwellenwerts erreicht. Alternativ könnte die Steuereinrichtung den Temperaturgradienten-Schwellenwert ermitteln, indem sie diesen aus einer Tabelle liest. Hierbei hängt die Genauigkeit der Bestimmung eines Überhitzungszustandes davon ab mit welchen Intervallen der Temperaturgradienten-Schwellenwert in der Tabelle abgelegt ist. Die Berechnung hat den Vorteil, dass vorab keine Speicher konsumierenden Tabellen bereitgestellt werden müssen, sondern der Temperaturgradienten-Schwellenwert zeitnah während des Betriebs der erfindungsgemäßen Steuereinrichtung ermittelt wird.

Des Weiteren kann die erfindungsgemäße Steuereinrichtung derart weitergebildet werden, dass die Steuereinrichtung den Temperaturgradienten-Schwellenwert anhand der Gleichung

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

ermittelt, in der $c_1$, $c_2$ und $c_3$ vorab ermittelte und in der Steuereinrichtung abgelegte Koeffizienten sind. Die Umgebungstemperatur wird hier nicht unbedingt in die Ermittlung des Temperaturgradienten-Schwellenwerts einbezogen. Es ist beispielsweise denkbar, dass die Koeffizienten durch Versuche vorab ermittelt und in der Steuereinrichtung abgelegt werden. Außerdem können Berechnungen abhängig von ausgewählten Wärmeträgersystemkomponenten, dem ausgewählten Wärmeträger u.Ä. die Grundlage für die vorab ermittelten Koeffizienten sein.

Alternativ kann die erfindungsgemäße Steuereinrichtung so weitergebildet werden, dass die Steuereinrichtung den Temperaturgradienten-Schwellenwert anhand der Gleichung

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

ermittelt, in der $c_1$ und $c_2$ in Abhängigkeit von der Umgebungstemperatur von der Steuereinrichtung ermittelte Koeffizienten sind und $c_3$ ein vorab ermittelter und in der Steuereinrichtung abgelegter Koeffizient ist.

Durch diese Formeln ist eine konkrete Bestimmungsweise zum Ermitteln des Temperaturgradienten-Schwellenwerts gegeben.

Das erfindungsgemäße Heizgerät, Heizsystem und Verfahren zum Steuern des Heizgeräts bauen auf dem gattungsgemäßen Stand der Technik dadurch auf, dass die Steuereinrichtung den Temperaturgradienten-Schwellenwert dynamisch in Abhängigkeit eines Temperaturunterschieds zwischen einer zu erreichenden Zieltemperatur des Wärmeträgers und einer aktuellen Wärmeträgertemperatur ermittelt. Dadurch ergeben sich im Zusammenhang mit der erfindungsgemäßen Steuereinrichtung erläuterten Vorteile und Eigenschaften in gleicher oder ähnlicher Weise.

Eine bevorzugte Ausführungsform der Erfindung wird nachfolgend anhand der Figuren beispielhaft erläutert.

Es zeigen:

Figur 1 ein schematisches Blockschaltbild des erfindungsgemäßen Heizsystems;

Figur 2 ein Diagramm zur qualitativen Verdeutlichung der Abhängigkeit zwischen Temperaturgradienten-Schwellenwert und dem Temperaturunterschied zwischen der zu erreichenden Zieltemperatur des Wärmeträgers und einer aktuellen Wärmeträgertemperatur.

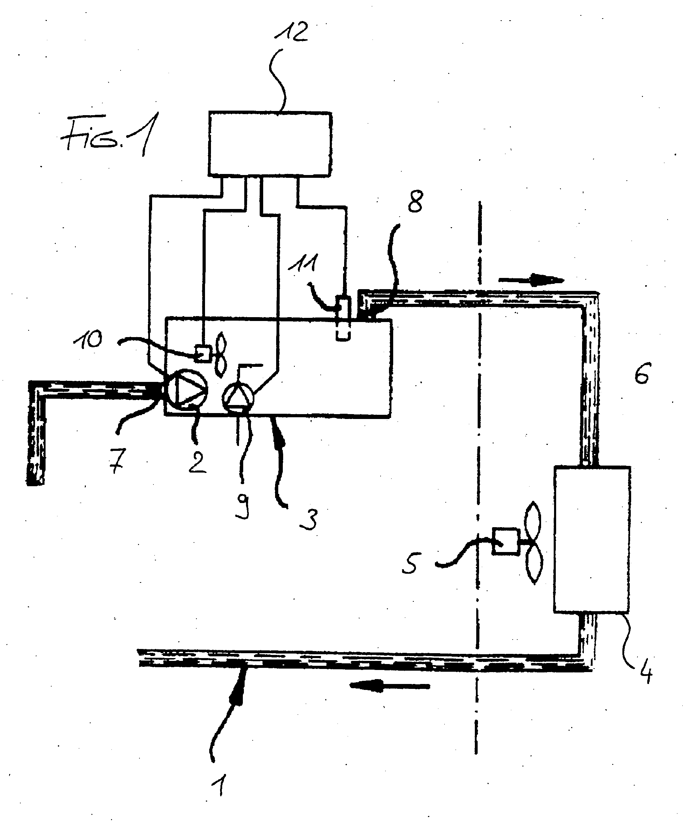

In Figur 1 ist schematisch ein Beispiel des Wärmeträgersystems bzw. Wärmeträgerkreislaufs 1, wie beispielsweise eines Kühlmittelkreislaufs mit einer Heizung für Kraftfahrzeuge, dargestellt. Im Wärmeträgerkreislauf 1 zirkuliert, wie durch Pfeile angedeutet, ein Wärmeträger, wie beispielsweise Wasser, welches Zusätze enthalten kann. Der Wärmeträgerkreislauf 1 enthält eine Umwälzpumpe 2, ein motorunabhängiges, brennstoffbetriebenes Heizgerät 3, in das die Umwälzpumpe 2 integriert ist, und einen Wärmetauscher 4, dem ein Fahrzeugheizungsgebläse 5 zugeordnet ist. Bei aufgeheiztem Wärmeträger und eingeschaltetem Gebläse 5 wird Wärme an einen Fahrzeuginnenraum 6 abgegeben, der in Figur 1 schematisch durch den rechts der strichpunktierten Linie liegenden Teil angedeutet ist.

Das Heizgerät 3 hat einen Einlass 7 und einen Auslass 8. Der Einlass 7 und die Austrittsseite des Wärmetauschers 4 können beispielsweise zu einem Verbrennungsmotor (nicht dargestellt) führen. Ferner umfasst das Heizgerät 3 eine Dosierpumpe 9 und ein Brennluftgebläse 10 für die Zufuhr von Brennluft und Brennstoff zu einem ansonsten nicht näher gezeigten Brenneraggregat. In das Heizgerät 3 ist ferner die Umwälzpumpe 2 integriert, welche den Wärmeträger im Wärmeträgerkreislauf 1 zirkulieren lässt. Mit 11 ist in Figur 1 ein im Bereich des Auslasses 8 des Heizgerätes 3 zweckmäßigerweise in dieses integriert angeordneter Temperatursensor bezeichnet, welcher die Temperatur ($\vartheta_{Ist}$) des Wärmeträgers am Austritt aus dem Heizgerät 3 erfasst.

Der Ausgang des Temperatursensors 11 ist mit einer Steuereinrichtung 12 verbunden, deren Ausgänge mit der Umwälzpumpe 2, der Dosierpumpe 9 und dem Brennluftgebläse 10 verbunden sind. Wesentlich für die Erfindung ist, dass die Steuereinrichtung 12 derart Einfluss auf das Heizgerät 3 nehmen kann, dass es dessen Heizleistung steuern kann. Dies kann durch entsprechendes Ansteuern der Dosierpumpe 9 und/oder des Brennluftgebläses 10 verwirklicht werden. Beispielsweise könnte die Steuereinrichtung 12 auch mit einer heizgerätinternen Betriebssteuerung (nicht dargestellt) verbunden sein, wobei die Steuereinrichtung 12 nur eine Zielheizleistung an die Betriebssteuerung weitergibt und die heizgeräteigene Betriebssteuerung die Dosierpumpe 9 und das Brennluftgebläse 10 entsprechend ansteuert, so dass diese Zielheizleistung erreicht wird. Die Steuereinrichtung 12 kann auch selbst in das Heizgerät 3 integriert sein.

Über den Temperatursensor 11 werden nach dem Start des Heizgerätes 3 in bestimmten Zeitintervallen Wärmeträgertemperaturen ($\vartheta_{Ist}$) an die Steuereinrichtung 12 ausgegeben und von diesem ausgewertet. Die Steuereinrichtung 12 wertet dabei den Temperaturanstieg des Wärmeträgers pro Zeiteinheit aus, so dass sich der zeitliche Temperaturgradient (($dT/dt)_{Ist}$) des Wärmeträgers ergibt. Dabei erfolgt die Überprüfung und Berechnung des Temperaturgradienten (($dT/dt)_{Ist}$) in einem zu definierenden Zeitintervall. Hierzu benötigt die Steuereinrichtung für die Berechnung des aktuellen Temperaturgradienten (($dT/dt)_{Ist}$) zumindest zwei in einem vorbestimmten Zeitintervall gemessene Wärmeträgertemperaturen ($\vartheta_{Ist}$).

Dieser ermittelte aktuelle Temperaturgradient (($dT/dt)_{Ist}$) des Wärmeträgers wird in immer wiederkehrenden Wiederholungen mit einem Temperaturgradienten-Schwellenwert (($dT/dt)_{Schwell}$) verglichen. Sobald der aktuelle Temperaturgradient (($dT/dt)_{Ist}$) den Temperaturgradienten-Schwellenwert (($dT/dt)_{Schwell}$) erreicht oder übersteigt, deutet dies frühzeitig auf die Gefahr eines entstehenden Überhitzungszustands hin, und die Heizleistung des Heizgeräts 3 wird vermindert bzw. das Heizgerät 3 wird abgeschaltet.

Ein solcher Überhitzungszustand kann durch eine trockene Überhitzung, d.h. fehlendes Kühlmittel im Wärmeträger des Heizgeräts 3, oder ein stillstehendes Wärmeträgermedium im Wärmeträgerkreislauf 1 ausgelöst werden. Wesentlich bei dieser Erkennung eines möglichen bevorstehenden Überhitzungszustandes ist, dass die Steuereinrichtung 12 eine mögliche Überhitzung sehr frühzeitig und differenziert erkennt. Es ist also wichtig, dass das Heizgerät 3 die Heizleistung frühzeitig vermindert, um nicht in einen sicherheitskritischen Temperaturbereich zu gelangen. Der Begriff der Verminderung der Heizleistung enthält im Rahmen der vorliegenden Offenbarung auch die komplette Abschaltung des Heizgeräts 3, bei der die Heizleistung auf Null vermindert wird.

Für den vorstehend beschriebenen Vergleich des aktuellen Temperaturgradienten (($dT/dt)_{Ist}$) des Wärmeträgers mit einem Temperaturgradienten-Schwellenwert (($dT/dt)_{Schwell}$), wird der Temperaturgradienten-Schwellenwert (($dT/dt)_{Schwell}$) dynamisch, d.h. in immer wiederkehrenden Wiederholungen, neu berechnet.

Hierzu wird zunächst der Temperaturunterschied ($\Delta\vartheta$) zwischen der zu erreichenden Zieltemperatur ($\vartheta_{Soll}$) des Wärmeträgers und der aktuellen Temperatur ($\vartheta_{Ist}$) des Wärmeträgers nach folgender Gleichung berechnet:

$$\Delta\vartheta = \vartheta_{Soll} - \vartheta_{Ist}$$

Anschließend wird der Temperaturgradienten-Schwellenwert (($dT/dt)_{Schwell}$) abhängig von diesem errechneten Temperaturunterschied ($\Delta\vartheta$) und abhängig von der Umgebungstemperatur ($T_{amb}$) nach folgender Gleichung errechnet:

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

Dabei sind $c_1$ und $c_2$ in Abhängigkeit von der Umgebungstemperatur ($T_{amb}$) zu ermittelnde Koeffizienten. Hierfür wird die Umgebungstemperatur ($T_{amb}$) von einem nicht dargestellten Umgebungstemperatursensor erfasst und an die Steuereinheit ausgegeben, welche daraufhin in bestimmten Intervallen die Koeffizienten $c_1$ und $c_2$ neu berechnet. $\Delta t$ stellt ein beliebiges Zeitintervall dar, das idealerweise die physikalische Einheit des erfassten Temperaturgradienten und den Wert 1 besitzt.

$c_3$ ist ein zu bestimmender Koeffizient der nicht von der Umgebungstemperatur ($T_{amb}$) abhängt. Beispielsweise kann der Koeffizient $c_3$ vorab anhand von Versuchen oder Simulationen bestimmt werden.

Alternativ ist auch eine von der Umgebungstemperatur ($T_{amb}$) unabhängige Berechnung denkbar. In diesem Fall wären die Koeffizienten $c_1$ und $c_2$ aber nicht zwangsweise Null. Die Koeffizienten $c_1$ und $c_2$ können in einem solchen Fall beispielsweise ebenso anhand von Versuchen oder Simulationen bestimmt werden.

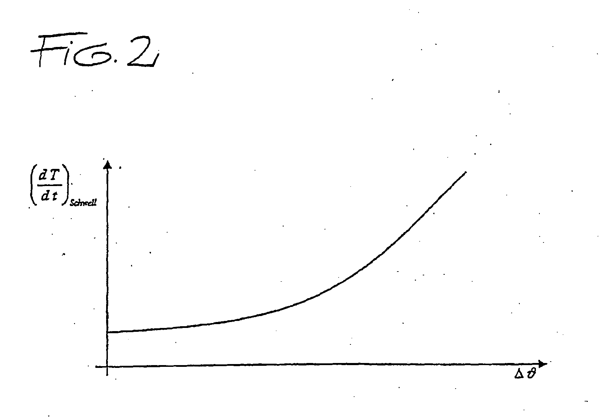

Die Berechnung des Temperaturgradienten-Schwellenwerts ($(dT/dt)_{Schwell}$) anhand der vorstehenden Gleichung wird qualitativ in Figur 2 veranschaulicht. Dabei kennzeichnet die Abszisse den Temperaturunterschied ($\Delta\vartheta$) und die Ordinate den Temperaturgradienten-Schwellenwert ($(dT/dt)_{Schwell}$).

Anhand von Figur 2 ist zu erkennen, dass mit zunehmender Temperaturdifferenz (z.B. in der Startphase des Heizgeräts) der maximale erlaubte Temperaturgradient ($(dT/dt)_{Ist}$), also der Temperaturgradienten-Schwellenwert $(dT/dt)_{Schwell}$), ansteigt. Hierdurch können die eingangs beschriebenen Vorteile erzielt werden.

In der Erläuterung der bevorzugten Ausführungsform wurde ein brennstoffbetriebenes Heizgerät 3 eingesetzt. Die Erfindung ist jedoch nicht hierauf begrenzt, vielmehr kann sie auch bei elektrisch betriebenen Heizgeräten eingesetzt werden.

Des Weitern muss der Temperatursensor 11 nicht notwendigerweise die Temperatur des Wärmeträgers direkt messen. Beispielsweise könnte das Brenneraggregat von einem abgeschlossenen, flüssigen Wärmetauschermedium umgeben sein, über welches der Wärmeträger erwärmt wird. In einem solchen Fall wäre es auch denkbar die Temperatur des Wärmetauschermediums zu messen.

In der vorangegangenen Beschreibung und den beigefügten Ansprüchen ist beabsichtigt, dass der Begriff "Steuern" auch ein "Regeln" abdecken soll. So soll beispielsweise die Beschreibung der Ansteuerung des Heizgerätes 3 auch abdecken, dass diese Ansteuerung im Rahmen einer Regelung erfolgt.

Bezugszeichenliste:

1 Wärmeträgerkreislauf
2 Umwälzpumpe
3 Heizgerät
4 Wärmetauscher
5 Fahrzeugheizungsgebläse
6 Fahrzeuginnenraum
7 Einlass des Heizgeräts
8 Auslass des Heizgeräts
9 Dosierpumpe
10 Brennluftgebläse
11 Temperatursensor
12 Steuereinrichtung

**Patentansprüche**

1. Steuereinrichtung (12) für ein motorunabhängiges Heizgerät (3), das einen flüssigen Wärmeträger eines Wärmeträgerkreislaufs (1) insbesondere für Kraftfahrzeuge erwärmt, wobei die Steuereinrichtung (12) eine Heizleistung des Heizgeräts (3) verringert, wenn ein aktueller Temperaturgradient ($(dT/dt)_{Ist}$) des Wärmeträgers gleich oder größer als ein Temperaturgradienten-Schwellenwert ($(dT/dt)_{Schwell}$) ist, **dadurch gekennzeichnet, dass** die Steuereinrichtung (12) den Temperaturgradienten-Schwellenwert ($(dT/dt)_{Schwell}$) dynamisch in Abhängigkeit eines Temperaturunterschieds ($\Delta\vartheta$) wischen einer zu erreichenden Zieltemperatur ($\vartheta_{Soll}$) des Wärmeträgers und einer aktuellen Wärmeträgertemperatur ($\vartheta_{Ist}$) ermittelt.

2. Steuereinrichtung (12) gemäß Anspruch 1, **dadurch gekennzeichnet, dass** die Steuereinrichtung (12) bei der Ermittlung des Temperaturgradienten-Schwellenwertes ($(dT/dt)_{Schwell}$) zusätzlich eine Umgebungstemperatur ($T_{amb}$) berücksichtigt.

3. Steuereinrichtung (12) gemäß Anspruch 1 oder 2, **dadurch gekennzeichnet, dass** die Steuereinrichtung (12) den Temperaturgradienten-Schwellenwert ($(dT/dt)_{Schwell}$) ermittelt, indem sie diesen berechnet.

4. Steuereinrichtung (12) gemäß Anspruch 1, **dadurch gekennzeichnet, dass** die Steuereinrichtung (12) den Temperaturgradienten-Schwellenwert ($(dT/dt)_{Schwell}$) anhand der Gleichung

$$\left(\frac{dT}{dt}\right)_{Schwell} = c_1 \left(\frac{\Delta\vartheta}{\Delta t}\right)^2 + c_2 \frac{\Delta\vartheta}{\Delta t} + c_3$$

ermittelt, in der $c_1$, $c_2$ und $c_3$ vorab ermittelte und in der Steuereinrichtung (12) abgelegte Koeffizienten sind.

5. Steuereinrichtung (12) gemäß einem der Ansprüche 1 bis 3, **dadurch gekennzeichnet, dass** die Steuereinrichtung (12) den Temperaturgradienten-Schwellenwert ($(dT/dt)_{Schwell}$) anhand der Gleichung

$$\left(\frac{dT}{dt}\right)_{Schwell} = c_1 \left(\frac{\Delta\vartheta}{\Delta t}\right)^2 + c_2 \frac{\Delta\vartheta}{\Delta t} + c_3$$

ermittelt, in der $c_1$ und $c_2$ in Abhängigkeit von der Umgebungstemperatur ($T_{amb}$) von der Steuereinrichtung (12) ermittelte Koeffizienten sind und $c_3$ ein vorab ermittelter und in der Steuereinrichtung (12) abgelegter Koeffizient ist.

6. Heizgerät (3) insbesondere für Kraftfahrzeuge, mit:

   - einer motorunabhängigen Wärmequelle zum Erwärmen eines in einem Wärmeträgerkreislauf (1) befindlichen flüssigen Wärmeträgers,
   - einem Temperatursensor (11) zum Erfassen einer aktuellen Temperatur des Wärmeträgers in der Umgebung eines Austritts, an dem der Wärmeträger aus dem Heizgerät (3) austritt, und
   - einer Steuereinrichtung (12) gemäß einem der Ansprüche 1 bis 5 zum Steuern einer Heizleistung des Heizgeräts (3).

7. Heizsystem insbesondere für Kraftfahrzeuge, mit:

   - einem Wärmeträgerkreislauf (1), der mit einem flüssigen Wärmeträger gefüllt ist, welcher in der Lage ist, Wärmeenergie aufzunehmen, weiterzutransportieren und an einer vorbestimmten Stelle wieder abzugeben, und
   - einem Heizgerät (3) gemäß Anspruch 6 zum Erwärmen des Wärmeträgers.

8. Verfahren zum Steuern eines motorunabhängigen Heizgeräts (3), das einen flüssigen Wärmeträger eines Wärmeträgerkreislaufs (1) insbesondere für Kraftfahrzeuge erwärmt, wobei das Verfahren folgende Schritte aufweist:

   - Ermitteln eines aktuellen Temperaturgradienten $((dT/dt)_{Ist})$ des Wärmeträgers,
   - Ermitteln eines Temperaturgradienten-Schwellenwertes $((dT/dt)_{Schwell})$,
   - Vergleichen des aktuellen Temperaturgradienten $((dT/dt)_{Ist})$ mit dem Temperaturgradienten-Schwellenwertes $((dT/dt)_{Schwell})$,
   - Vermindern der Heizleistung des Heizgeräts (3), wenn der aktuelle Temperaturgradient $((dT/dt)_{Ist})$ gleich oder größer als der Temperaturgradienten-Schwellenwert $((dT/dt)_{Schwell})$ ist,

   **dadurch gekennzeichnet, dass** der Temperaturgradienten-Schwellenwert $((dT/dt)_{Schwell})$ dynamisch und in Abhängigkeit eines Temperaturunterschieds $(\Delta\vartheta)$ zwischen einer zu erreichenden Zieltemperatur $(\vartheta_{Soll})$ des Wärmeträgers und einer aktuellen Wärmeträgertemperatur $(\vartheta_{Ist})$ ermittelt wird.

9. Verfahren gemäß Anspruch 8, **dadurch gekennzeichnet, dass** bei der Ermittlung des Temperaturgradienten-Schwellenwertes $((dT/dt)_{Schwell})$ zusätzlich eine Umgebungstemperatur $(T_{amb})$ berücksichtigt wird.

10. Verfahren gemäß Anspruch 8 oder 9, **dadurch gekennzeichnet, dass** der Temperaturgradienten-Schwellenwert $((dT/dt)_{Schwell})$ ermittelt wird, indem dieser berechnet wird.

11. Verfahren gemäß Anspruch 8, **dadurch gekennzeichnet, dass** der Temperaturgradienten-Schwellenwert $((dT/dt)_{Schwell})$ anhand der Gleichung

$$\left(\frac{\dot{dT}}{dt}\right)_{Schwell} = c_1\left(\frac{\Delta\vartheta}{\Delta t}\right)^2 + c_2\frac{\Delta\vartheta}{\Delta t} + c_3$$

ermittelt wird, in der $c_1$, $c_2$ und $c_3$ vorab ermittelte Koeffizienten sind.

12. Verfahren gemäß einem der Ansprüche 8 bis 10, **dadurch gekennzeichnet, dass** der Temperaturgradienten-Schwellenwert $((dT/dt)_{Schwell})$ anhand der Gleichung

$$\left(\frac{\dot{dT}}{dt}\right)_{Schwell} = \dot{c_1}\left(\frac{\Delta\vartheta}{\Delta t}\right)^2 + c_2\frac{\Delta\vartheta}{\Delta t} + c_3$$

ermittelt wird, in der $c_1$ und $c_2$ in Abhängigkeit von der Umgebungstemperatur $(T_{amb})$ ermittelte Koeffizienten sind und $c_3$ ein vorab ermittelter Koeffizient ist.

**Claims**

1. A control device (12) for an engine-independent heater (3) that heats a liquid heat transfer medium of a heat transfer medium circuit (1) especially for motor vehicles, the control device (12) reducing a heating capacity of the heater (3) when a current temperature gradient $((dT/dt)_{Ist})$ of the heat transfer medium is equal to or greater than a temperature gradient threshold value $((dT/dt)_{Schwell})$, **characterized in that** the control device (12) determines the temperature gradient threshold value $((dT/dt)_{Schwell})$ dynamically as a function of a temperature difference $(\Delta\vartheta)$ between a target temperature $(\vartheta_{Soll})$ of the heat transfer medium that is to be achieved and a current heat transfer medium temperature $(\vartheta_{Ist})$.

2. The control device (12) according to claim 1, **characterized in that** when determining the temperature gradient threshold value $((dT/dt)_{Schwell})$ the control device (12) additionally takes account of an ambient temperature $(T_{amb})$.

3. The control device (12) according to claim 1 or 2, **characterized in that** the control device (12) determines the temperature gradient threshold value ($(dT/dt)_{Schwell}$) by calculating it.

4. The control device (12) according to claim 1, **characterized in that** the control device (12) determines the temperature gradient threshold value ($(dT/dt)_{Schwell}$) with the aid of the equation

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

in which $c_1$, $c_2$ and $c_3$ are coefficients determined in advance and stored in the control device (12).

5. The control device (12) according to one of claims 1 to 3, **characterized in that** the control device (12) determines the temperature gradient threshold value ($(dT/dt)_{Schwell}$) with the aid of the equation

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

in which $c_1$ and $c_2$ are coefficients determined by the control device (12) as a function of the ambient temperature ($T_{amb}$), and $c_3$ is a coefficient determined in advance and stored in the control device (12).

6. A heater (3) especially for motor vehicles, having:

- an engine-independent heat source for heating a liquid heat transfer medium located in a heat transfer medium circuit (1),
- a temperature sensor (11) for detecting a current temperature of the heat transfer medium in the surroundings of an outlet at which the heat transfer medium exits the heater (3), and
- a control device (12) according to one of claims 1 to 5 for controlling a heating capacity of the heater (3).

7. A heating system especially for motor vehicles, having:

- a heat transfer medium circuit (1) that is filled with a liquid heat transfer medium that is capable of absorbing thermal energy, transporting it further, and outputting it again at a predetermined location, and
- a heater (3) according to claim 6 for heating the heat transfer medium.

8. A method for controlling an engine-independent heater (3) that heats a liquid heat transfer medium of a heat transfer medium circuit (1) especially for motor vehicles, the method having the following steps:

- determining a current temperature gradient ($(dT/dt)_{Ist}$) of the heat transfer medium,
- determining a temperature gradient threshold value ($(dT/dt)_{Schwell}$),
- comparing the current temperature gradient ($(dT/dt)_{Ist}$) with the temperature gradient threshold value ($(dT/dt)_{Schwell}$), and
- reducing the heating capacity of the heater (3) when the current temperature gradient ($(dT/dt)_{Ist}$) is equal to or greater than the temperature gradient threshold value ($(dT/dt)_{Schwell}$),

**characterized in that** the temperature gradient threshold value ($(dT/dt)_{Schwell}$) is determined dynamically and as a function of a temperature difference ($\Delta\vartheta$) between a target temperature ($\vartheta_{Soll}$) of the heat transfer medium that is to be achieved and a current heat transfer medium temperature ($\vartheta_{Ist}$).

9. Method according to claim 8, **characterized in that** an ambient temperature ($T_{amb}$) is additionally taken into account during the determination of the temperature gradient threshold value ($(dT/dt)_{Schwell}$).

10. The method according to claim 8 or 9, **characterized in that** the temperature gradient threshold value ($(dT/dt)_{Schwell}$) is determined by being calculated.

11. The method according to claim 8, **characterized in that** the temperature gradient threshold value ($(dT/dt)_{Schwell}$) is determined with the aid of the equation

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

in which $c_1$, $c_2$ and $c_3$ are coefficients determined in advance.

12. The method according to one of claims 8 to 10, **characterized in that** the temperature gradient threshold value ($(dT/dt)_{Schwell}$) is determined with the aid of the equation

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

in which $c_1$ and $c_2$ are coefficients determined as a function of the ambient temperature ($T_{amb}$) and $c_3$ is a coefficient determined in advance.

## Revendications

1. Dispositif de commande (12) destiné à un appareil de chauffage (3) indépendant du moteur qui chauffe un fluide caloporteur liquide d'un circuit de fluide caloporteur (1), notamment pour véhicules à moteur, dans lequel le dispositif de commande (12) diminue une puissance de chauffage de l'appareil de chauffage (3) lorsqu'un gradient de température instantané (($dT/dt)_{Ist}$) du fluide caloporteur est supérieur ou égal à une valeur de seuil des gradients de température (($dT/dt)_{Ist}$), **caractérisé en ce que** le dispositif de commande (12) détermine dynamiquement la valeur de seuil des gradients de température (($dT/dt)_{Schwell}$) en fonction d'une différence de température ($\Delta\vartheta$) entre une température nominale à atteindre ($\vartheta_{Soll}$) du fluide caloporteur et une température instantanée ($\vartheta_{Ist}$) du fluide caloporteur.

2. Dispositif de commande (12) selon la revendication 1, **caractérisé en ce que** le dispositif de commande (12) tient en outre compte d'une température ambiante ($T_{amb}$) lors de la détermination de la valeur de seuil des gradients de température (($dT/dt)_{Schwell}$).

3. Dispositif de commande (12) selon la revendication 1 ou 2, **caractérisé en ce que** le dispositif de commande (12) détermine la valeur de seuil des gradients de température (($dT/dt)_{Schwell}$) en la calculant.

4. Dispositif de commande (12) selon la revendication 1, **caractérisé en ce que** le dispositif de commande (12) détermine la valeur de seuil des gradients de température (($dT/dt)_{Schwell}$) sur la base de l'équation suivante:

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

dans laquelle $c_1$, $c_2$ et $c_3$ sont des coefficients déterminés à l'avance et stockés dans le dispositif de commande (12).

5. Dispositif de commande (12) selon l'une quelconque des revendications 1 à 3, **caractérisé en ce que** le dispositif de commande (12) détermine la valeur de seuil des gradients de température (($dT/dt)_{Schwell}$) sur la base de l'équation suivante:

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

dans laquelle $c_1$ et $c_2$ sont des coefficients déterminés par le dispositif de commande (12) en fonction de la température ambiante ($T_{amb}$) et $c_3$ est un coefficient déterminé à l'avance et stocké dans le dispositif de commande (12).

6. Appareil de chauffage (3), notamment pour véhicules à moteur, comprenant:

   - une source de chaleur indépendante du moteur destinée à chauffer un fluide caloporteur liquide se trouvant dans un circuit de fluide caloporteur (1),
   - un capteur de température (11) destiné à saisir une température instantanée du fluide caloporteur au voisinage d'une sortie où le fluide caloporteur sort de l'appareil de chauffage (3), et
   - un dispositif de commande (12) selon l'une quelconque des revendications 1 à 5, destiné à commander une puissance de chauffage de l'appareil de chauffage (3).

7. Appareil de chauffage, notamment pour véhicules à moteur, comprenant

   - un circuit de fluide caloporteur (1) rempli d'un fluide caloporteur liquide qui est capable d'absorber de l'énergie thermique, de la transporter et de la restituer en un point prédéterminé, et
   - un appareil de chauffage (3) selon la revendication 6 destiné à chauffer le fluide caloporteur.

8. Procédé de commande d'un appareil de chauffage indépendant du moteur (3) qui chauffe un fluide caloporteur liquide d'un circuit de fluide caloporteur (1), notamment pour véhicules à moteur, le procédé comportant les étapes suivantes:

   - déterminer un gradient de température instantané (($df/dt)_{Ist}$) du fluide caloporteur,
   - déterminer une valeur de seuil des gradients de température (($dT/dt)_{Schwell}$),
   - comparer le gradient de température instantanée (($dT/dt)_{Ist}$) à la valeur de seuil des gradients de température (($dT/dt)_{Schwell}$),
   - réduire la puissance de chauffage de l'appareil de chauffage (3) lorsque le gradient de température instantané (($dT/dt)_{Ist}$) est supérieur ou égal à la valeur de seuil des gradients de température (($dT/dt)_{Schwell}$),

   **caractérisé en ce que** la valeur de seuil des gradients de température ($(dT/dt)_{Schwell}$) est déterminée dynamiquement et en fonction d'une différence de température ($\Delta\vartheta$) entre une température nominale à atteindre ($\vartheta_{Soll}$) du fluide caloporteur et une température instantanée du fluide caloporteur ($\vartheta_{Ist}$).

9.  Procédé selon la revendication 8, **caractérisé en ce qu'**une température ambiante ($T_{amb}$) est en outre prise en compte lors de la détermination de la valeur de seuil des gradients de température ($(dT/dt)_{Schwell}$).

10. Procédé selon les revendications 8 ou 9, **caractérisé en ce que** la valeur de seuil des gradients de température ($(dT/dt)_{Schwell}$) est déterminée en la calculant.

11. Procédé selon la revendication 8, **caractérisé en ce que** la valeur de seuil des gradients de température ($(dT/dt)_{Schwell}$) est déterminée sur la base de l'équation suivante:

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

dans laquelle $c_1$, $c_2$ et $c_3$ sont des coefficients déterminés à l'avance.

12. Procédé selon l'une quelconque des revendications 8 à 10, **caractérisé en ce que** la valeur de seuil des gradients de température ($(dT/dt)_{Schwell}$) est déterminée sur la base de l'équation suivante:

$$\left(\frac{dT}{dt}\right)_{Schwell} = c_1\left(\frac{\Delta\vartheta}{\Delta t}\right)^2 + c_2\frac{\Delta\vartheta}{\Delta t} + c_3$$

dans laquelle $c_1$ et $c_2$ sont des coefficients déterminés en fonction de la température ambiante ($T_{amb}$) et $c_3$ est un coefficient déterminé à l'avance.

Fig.1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19524260 C2

- DE 4123678 A1